Europäisches Patentamt

European Patent Office

Office européen des brevets

(11) Publication number: **0 295 342 B1**

# EUROPEAN PATENT SPECIFICATION

(45) Date of publication of patent specification: **18.03.92**   (51) Int. Cl.⁵: **H02H  1/06**

(21) Application number: **87305301.1**

(22) Date of filing: **15.06.87**

(54) **Power source device for circuit breaker.**

(43) Date of publication of application:
**21.12.88 Bulletin  88/51**

(45) Publication of the grant of the patent:
**18.03.92 Bulletin  92/12**

(84) Designated Contracting States:
**DE FR GB IT**

(56) References cited:
**DE-A- 3 223 687**
**GB-A- 2 073 975**

(73) Proprietor: **MITSUBISHI DENKI KABUSHIKI KAISHA**
**2-3, Marunouchi 2-chome Chiyoda-ku**
**Tokyo 100(JP)**

(72) Inventor: **Hatakeyama, Yoshihiro c/o**
**Fukuyama Seisakusho**
**Mitsubishi Denki K.K. 1-8, Midori-machi**
**Fukuyama City Hiroshima Prefecture(JP)**
Inventor: **Arinobu, Ichirou c/o Fukuyama**
**Seisakusho**
**Mitsubishi Denki K.K. 1-8, Midori-machi**
**Fukuyama City Hiroshima Prefecture(JP)**

(74) Representative: **Lawson, David Glynne et al**
**MARKS & CLERK 57-60 Lincoln's Inn Fields**
**London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention:

This invention relates to a power source device for operating that electronic circuit of a circuit breaker which monitors the quantity of electricity of an electric path.

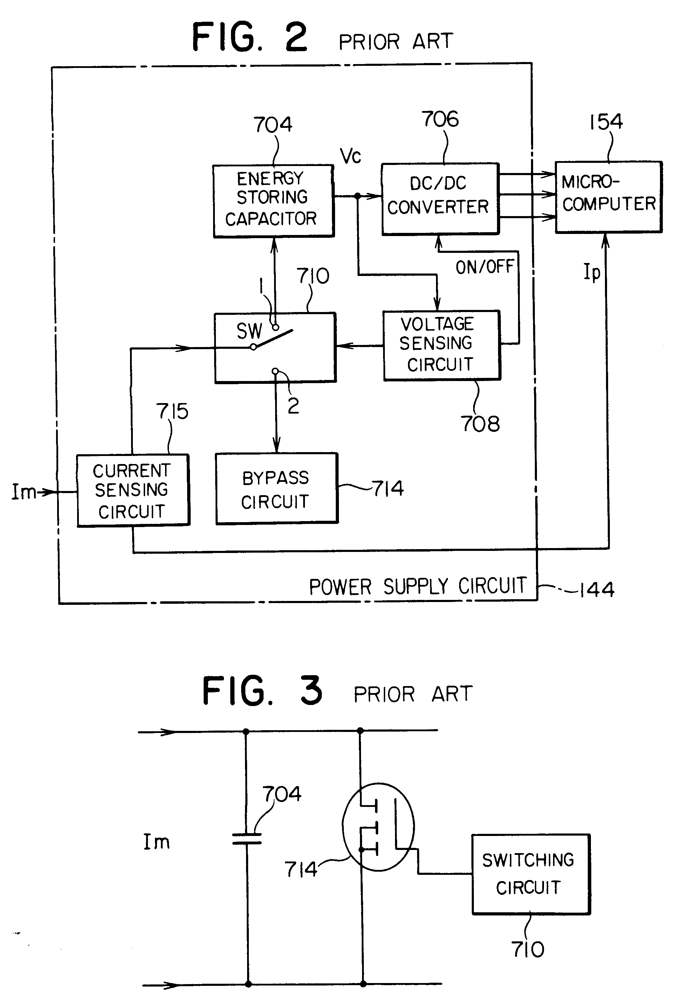

Figs. 2 and 3 show a prior-art power source device for a circuit breaker disclosed in the official gazette of Japanese Patent Application Laid-open No. 150920/1975. Fig. 2 is a block diagram. Referring to the figure, an input current Im is a current obtained in such a way that current flowing through the electric path of each of the phases of the circuit breaker is detected by a detector, not shown, and then rectified. A current sensing circuit 715 applies the input current Im to a switching circuit 710, and it converts the current Im into a voltage and applies the voltage to a microcomputer 154 as a current sensing signal. The switching circuit 710 is a switch which is controlled by a voltage sensing circuit 708, and it changes-over the output of the current sensing circuit 715 to either an energy storing capacitor 704 or a bypass circuit 714. The energy storing capacitor 704 is a capacitor for smoothing the input current. A D.C./D.C. converter 706 is a circuit for obtaining a constant voltage output on the basis of a D.C. input Vc smoothed by the energy storing capacitor 704.

If the output voltage Vc of the energy storing capacitor 704 based on the input current Im is not greater than a predetermined voltage, for example, 39 V, the voltage sensing circuit 708 throws the switching circuit 710 to a contact 1, and the input current Im charges the energy storing capacitor 704. When the output voltage Vc exceeds the predetermined voltage, the switching circuit 710 is changed-over to a contact 2, so that the input current Im is bypassed by the bypass circuit 714. A practicable example of the bypass circuit 714 is shown in Fig. 3. In the figure, the bypass circuit 714 is a chopper circuit which is constructed of an FET. When the output voltage Vc lowers to a predetermined voltage, for example, 34 V or less, the switching circuit 710 is changed-over to the contact 1. The voltage sensing circuit 708 is constructed so as to have a hysteresis characteristic as stated above. The D.C./D.C. converter 706 is constructed so as to deliver the regular fixed output voltage in the range in which the output voltage Vc is 34 V - 39 V in the above example. Besides, the D.C./D.C. converter 706 is controlled by the voltage sensing circuit 708 so as to turn ON at 37 V and OFF at 33 V in terms of the output voltage Vc in the above example.

A similar power source device for a fault-current circuit interrupter is also disclosed in GB-A-2 073 975.

Since the prior-art power source circuit for the circuit breaker is constructed and operated as thus far described, the burden of the capacitor widely changes depending upon the ON or OFF state of the D.C./D.C. converter, and the energy storing capacitor repeats charging and discharging on each occasion. Therefore, the energy storing capacitor must have its voltage heightened considerably and its capacitance increased so as to store a large amount of charges, and a capacitor of high capacitance and high withstand voltage has been required. In addition, the wide change of the output impedance of the current sensing circuit attributed to the charging and discharging of the energy storing capacitor and the change-over of the switching circuit 710 (in general, the bypass circuit is of low impedance) exerts influence on the current of the current detection means. Accordingly, when means for measuring current is disposed on the primary side of the current detection means, there has been problem that the result of the measurement is affected to worsen the accuracy thereof.

### Summary of the Invention:

A power source device for a circuit breaker according to this invention compensates the above-stated disadvantages by virtue of a construction which rectifies and smooths an output of current detection means, which comprises a switching circuit for changing-over the resulting output to a dummy burden or a constant-voltage generating circuit, and in which the switching circuit is controlled on the basis of an output voltage of the constant-voltage generating circuit or rectification means, while the dummy burden and a burden including the constant-voltage generating circuit are equivalently equalized.

According to the present invention there is provided a power source device for a circuit breaker in accordance with the appended claims, to which reference is hereby directed.

Brief Descripton of the Drawings:

Fig. 1 is a block diagram showing an embodiment of this invention:
Fig. 2 is a block diagram of a prior-art example; and
Fig. 3 is a circuit diagram showing the details of a bypass circuit in the prior-art example.

Description of the preferred Embodiment:

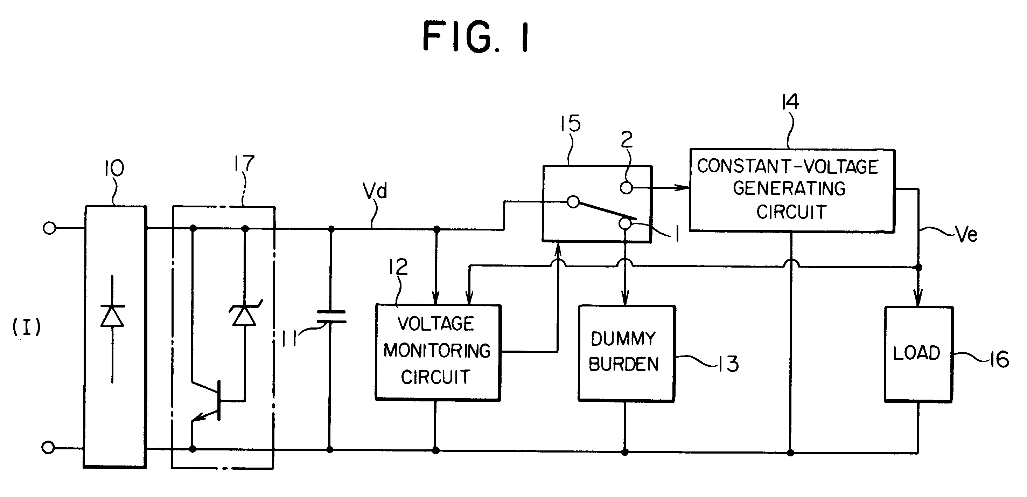

Fig. 1 shows an embodiment of this invention. Referring to the figure, a rectifying circuit 10 rectifies the detected current I of current detection means such as a current transformer, not shown. An overvoltage preventing circuit 17 is connected in parallel with the rectifying circuit 10, and it is actuated to protect circuitry when a high voltage exceeding a predetermined voltage has been delivered from the rectifying circuit 10. A capacitor 11 is connected in parallel with the rectifying circuit 10. A voltage monitoring circuit 12 is connected so as to monitor the terminal voltage of the capacitor 11 and a voltage to be fed to a load 16. A switching circuit 15 is controlled by the voltage monitoring circuit 12, and it changes-over the output of the rectifying circuit 10 to a circuit connected with a contact 1 or a contact 2. A dummy burden 13 is connected to the contact 1, while a constant-voltage generating circuit 14 is connected to the contact 2. The output terminal of the constant-voltage generating circuit 14 is connected to the power source terminal of the load 16 such as a microcomputer.

Next, the operation of the embodiment will be described. The secondary output of the current transformer, not shown, which detects the current flowing through the electric path of a circuit breaker is rectified by the rectifying circuit 10, and is charged in the capacitor 11. If the charged voltage Vd is not greater than the predetermined voltage, for example, 8 V, the voltage monitoring circuit 12 controls the switching circuit 15 so as to be thrown to the contact 1, and the capacitor 11 is charged with its burden being the dummy load 13. When the charged voltage Vd has exceeded the predetermined voltage, for example, 8 V, the switching circuit 15 is changed-over to the contact 2, so that the charged voltage Vd is applied to the constant-voltage generating circuit 14. The constant-voltage generating circuit 14 is a circuit for controlling its output voltage to a constant value even when the charged voltage Vd changes. In the above case, the constant value is set at 5 V by way of example. This constant voltage Ve is fed to the load 16. The voltage monitoring circuit 12 changes-over the switching circuit 15 to the contact 1 when the output voltage Ve has lowered down to a voltage of 4.5 V below which the load 16 fails to operate normally. As described above, the voltage monitoring circuit 12 monitors both the charged voltage Vd and the output voltage Ve at all times and changes-over the switching circuit 15 properly. On this occasion, the dummy burden 13 is equivalently equalized to a burden which consists of the constant-voltage generating circuit 14 and the load 16. More specifically, letting $I_2$ denote a current which flows via the terminal 2 when the charged voltage at the change-over of the switching circuit 15 is expressed by $Vd_1$, the dummy burden is set at a value equal to a resistance R which is obtained

according to $R = Vd_1/I_2$. Then, when the switching circuit 15 has been changed-over, the burden of the capacitor 11 does not substantially change, and the change of the charged voltage of the capacitor 11 can be restrained to zero or a slight value. In a case where the constant-voltage generating circuit 14 and the load 16 are not formed of a pure resistance but have an impedance based on a capacitance or/and an inductance, the dummy burden 13 is similarly configured so as to include the impedance. In the above case, accordingly, both the burdens are set so as to become equivalently equal.

According to this invention, the burden of the capacitor 11 is always constant, so that when the switching circuit 15 has been changed-over, the change of the charging or discharging of the capacitor 11 is negligibly small and has no influence on the detected current I of the current detection means and the input thereof. Accordingly, even in a case where detection means for measurement, etc. are connected to the current detection means, the detected results thereof are not adversely affected and can maintain high precisions. Moreover, since the change of the charged voltage of the capacitor 11 is small, a capacitor of low withstand voltage can be used, and the circuit arrangement can be rendered small in size and low in cost.

## Claims

1. A power source device for a circuit breaker, comprising rectification means (10) for rectifying an output of current detection means, a storage capacitor (11) for smoothing an output of the rectification means (10), a switching circuit (15) which directs the output of the rectification means (10) to a first terminal (2) or a second terminal (1) of the switching cicuit (15), and a constant voltage generating circuit (14) which is connected to the first terminal (2) of the switching circuit (15); characterised in that the power source device further comprises:

   (i) a voltage monitoring circuit (12) which controls the switching circuit (15) on the basis of the output voltage of the said constant voltage generating circuit (14) and the output voltage of the said rectification means (10); and

   (ii) a dummy burden (13) connected to the second terminal (1) of the said switching circuit (15) and configured such that, when the dummy burden (13) is connected to the capacitor (11) through the switching circuit (15), it provides a burden which is equivalently equal to the burden provided by the said constant voltage generating circuit (14) and a load (16) connected thereto.

2. A power source device for a circuit breaker as defined in Claim 1, wherein the value of said dummy burden (13) has an impedance which is based upon a capacitance and/or an inductance.

3. A power source device for circuit breaker as defined in Claim 1 or 2, wherein said current detection means includes means for obtaining a signal for current measurement.

**Revendications**

1. Un dispositif formant source d'alimentation pour un circuit déclencheur comprenant un moyen redresseur (10) pour redresser une sortie d'un moyen de détection de courant, un condensateur de stockage (11) pour lisser une sortie du moyen redresseur (10), un circuit de commutation (15) qui dirige la sortie du moyen redresseur (10) à une première borne (2) ou une seconde borne (1) du circuit de commutation (15), et un circuit (14) de génération de tension constante qui est relié à la première borne (2) du circuit de commutation (15), caractérisé en ce que le dispositif formant source d'alimentation comprend par ailleurs :

    (i) un circuit (12) de surveillance de tension qui commande le circuit de commutation (15) sur la base de la tension de sortie dudit circuit (14) de génération de tension constante et de la tension de sortie dudit moyen redresseur (10), et

    (ii) une charge fictive (13) reliée à la seconde borne (1) dudit circuit de commutation (15) et configurée de façon que lorsque la charge fictive (13) est reliée au condensateur (11) par le circuit de commutation (15), il fournit une charge qui est égale de façon équivalente à la charge fournie par ledit circuit (14) de génération de tension constante et une charge (16) reliée à celle-ci.

2. Un dispositif formant source d'alimentation pour un circuit déclencheur tel que défini à la revendication 1, dans lequel la valeur de ladite charge fictive (13) a une impédance qui est basée sur une capacitante et/ou une inductance.

3. Un dispositif formant source d'alimentation pour un circuit déclencheur tel que défini dans la revendication 1 ou 2, dans lequel ledit moyen de détection de courant comprend un moyen pour obtenir un signal pour une mesure de courant.

**Patentansprüche**

1. Stromversorgungseinrichtung für einen Leistungsschalter, die aufweist: eine Gleichrichtereinrichtung (10) zum Gleichrichten eines Ausgangssignals eines Stromdetektors, einen Speicherkondensator (11) zum Glätten eines Ausgangssignals der Gleichrichtereinrichtung (10), einen Schaltkreis (15), der das Ausgangssignal der Gleichrichterschaltung (10) zu einem ersten Anschluß (2) oder zu einem zweiten Anschluß (1) des Schaltkreises (15) leitet, und eine Konstantspannungserzeugungsschaltung (14), die mit dem ersten Anschluß (2) des Schaltkreises (15) verbunden ist; dadurch gekennzeichnet, daß die Stromversorgungseinrichtung ferner aufweist:

    (i) Spannungsüberwachungsschaltung (12), die den Schaltkreis (15) aufgrund der Ausgangsspannung der Konstantspannungserzeugungsschaltung (14) und der Ausgangsspannung der Gleichrichtereinrichtung (10) steuert; und

    (ii) eine Scheinlast (13), die mit dem zweiten Anschluß (1) des Schaltkreises (15) verbunden und so ausgebildet ist, daß sie, wenn sie durch den Schaltkreis (15) an den Kondensator (11) angeschlossen ist, eine Last liefert, die der von der Konstantspannungserzeugungsschaltung (14) gelieferten Last und einer daran angeschlossenen Last (16) äquivalent gleich ist.

2. Stromversorgungseinrichtung für einen Leistungsschalter nach Anspruch 1, wobei der Wert der Scheinlast (13) eine auf einer Kapazität und/oder einer Induktivität beruhende Impedanz hat.

3. Stromversorgungseinrichtung für einen Leistungsschalter nach Anspruch 1 oder 2, wobei der Stromdetektor eine Einrichtung aufweist, die ein Signal zur Strommessung bildet.

# FIG. 1

EP 0 295 342 B1

# FIG. 2  PRIOR ART

704

ENERGY
STORING
CAPACITOR

Vc

706

DC/DC
CONVERTER

154

MICRO-
COMPUTER

710

1

SW

2

ON/OFF

VOLTAGE
SENSING
CIRCUIT

708

Ip

715

Im→

CURRENT
SENSING
CIRCUIT

BYPASS
CIRCUIT

714

POWER SUPPLY CIRCUIT ~144

# FIG. 3  PRIOR ART

704

Im

714

SWITCHING
CIRCUIT

710